# EUROPÄISCHE PATENTSCHRIFT

(11) **EP 2 368 097 B1**
(45) Veröffentlichungstag und Bekanntmachung des Hinweises auf die Patenterteilung: **30.01.2013**
(21) Anmeldenummer: 09801968.0
(22) Anmeldetag: 17.12.2009
(51) Int. Cl.: G01H 1/00

(54) **LAGERSCHWINGUNGSMESSEINRICHTUNG FÜR EINE TURBOMASCHINE**
BEARING VIBRATION MEASURING DEVICE FOR A TURBOMACHINE
DISPOSITIF DE MESURE DES VIBRATIONS DES PALIERS POUR UNE TURBOMACHINE

(30) Priorität: 18.12.2008 DE 102008062354
(43) Veröffentlichungstag der Anmeldung: 28.09.2011
(73) Patentinhaber: Siemens Aktiengesellschaft, 80333 München (DE)
(72) Erfinder: ANDERSSON, Thomas, S-590 78 Vreta Kloster (SE); BURNS, Nigel, BT670NJ Craigavon (GB)
(86) Internationale Anmeldenummer: PCT/EP2009/067409
(87) Internationale Veröffentlichungsnummer: WO 2010/070045

(56) Entgegenhaltungen:
- EP-A1- 2 034 275
- JP-A- 60 190 605
- US-A- 4 907 456
- US-A- 5 520 061

## Beschreibung

Die Erfindung betrifft eine Lagerschwingungsmesseinrichtung für eine Turbomaschine und eine Turbomaschine, die die Lagerschwingungsmesseinrichtung aufweist.

Eine Turbomaschine, beispielsweise eine Gasturbine, weist einen Rotor auf, der an seinen Längsenden mit jeweils einem Lager gelagert ist. Die Lager sind beispielsweise vom Typ geschmiertes Rollenlager oder geschmiertes Kippsegmentgleitlager. Beim Betrieb der Gasturbine rotiert der Rotor bei einer Betriebsdrehzahl, wobei beim Anfahren der Gasturbine der Rotor aus dem Stillstand auf die Betriebsdrehzahl gebracht wird.

Der Rotor hat eine rotordynamische Charakteristik, die insbesondere sowohl von dem Lagerabstand als auch von dem Massenträgheitsmoment und der Biegesteifigkeit des Rotors sowie der Steifigkeit und der Dämpfung der Lager abhängt. Die rotordynamische Charakteristik des Rotors ist bestimmt von kritischen Drehzahlen und den dazugehörigen Schwingungsmoden des Rotors. Einige kritische Drehzahlen liegen unterhalb der Betriebsdrehzahl, so dass beim Hochfahren der Gasturbine der Rotor diese kritischen Drehzahlen durchfahren muss. Beim Durchfahren einer der kritischen Drehzahlen sind in der Regel die Schwingungsamplituden des Rotors am größten, die jedoch ein maximal zulässiges Maß nicht überschreiten dürfen. Zur Überwachung der Schwingungsamplituden des Rotors wird herkömmlich das Schwingungsverhalten der Lager überwacht. Hiefür wird herkömmlich eine Schwingungsmesseinrichtung zur Messung der Schwingung des Lagers verwendet. Die Schwingungsmesseinrichtung weist mindestens einen Schwingungssensor auf, der an dem Gehäuse des Lagers angebracht ist.

Aus den Dokumenten US 5,520,061 A, EP 2 034 275 Al, US 4,907,456 A, JP 60-190605 A sind bereits Messvorrichtungen zur Schwingungsmessung bekannt.

Aufgabe der Erfindung ist es eine Lagerschwingungsmesseinrichtung für eine Turbomaschine und eine Turbine mit der Lagerschwingungsmesseinrichtung zu schaffen, wobei die Lagerschwingungsmessseinrichtung einfach und zuverlässig ist.

Die erfindungsgemäße Lagerschwingungsmesseinrichtung für eine Turbomaschine, in der mit mindestens einer Strebe ein Außengehäuse und ein Innengehäuse konzentrisch im Abstand zueinander gehalten sind, in dem ein Lagergehäuse angeordnet ist, das durch ein radial sich erstreckendes Durchgangsloch in der Strebe von dem Außengehäuse her zugänglich ist, weist einen Stab mit einem Innenlängsende und einem dem Innenlängsende abgewandten Außenlängsende auf, der in dem Durchgangsloch untergebracht ist und mit dem Innenlängsende an dem Lagergehäuse befestigt ist sowie an dem Außenlängsende mindestens einen Schwingungssensor auf.

Die erfindungsgemäße Turbomaschine weist ein Außengehäuse, ein Innengehäuse, ein in dem Innengehäuse angeordnetes Lagergehäuse und mindestens eine Strebe auf, mit der das Außengehäuse und das Innengehäuse konzentrisch im Abstand zueinander gehalten sind, wobei in der Strebe ein radial sich erstreckendes Durchgangsloch vorgesehen ist, wobei in dem Durchgangsloch die erfindungsgemäße Lagerschwingungsmesseinrichtung eingebaut ist, die mit ihrem Innenlängsende an dem Lagergehäuse befestigt ist und mit ihrem Außenlängsende in dem Außengehäuse sich erstreckt.

Der Stab ist bevorzugt mit seinem Innenlängsende an dem Lagergehäuse mit einer Gewindeverbindung befestigt. Ferner weist der Stab an seiner Außenoberfläche mindestens einen Abstützvorsprung auf, mit dem der Stab an der Innenseite des Durchgangslochs transversal abgestützt ist, so dass die Schwingungsamplitude eines Transversalschwingungsmodes des Stabs vermindert ist. Der Stab ist lang gestreckt ausgebildet und dadurch biegeweich. Beim Betrieb der Turbomaschine schwingt das Lagergehäuse, so dass von dem Lagergehäuse auf den Stab Schwingungsenergie übertragen wird. Dadurch wird der Stab von dem Lagergehäuse angeregt, so dass der Stab in einem entsprechenden Schwingungsmode schwingt. Wird der Abstützvorsprung in einem Bereich der Außenoberfläche angeordnet, in dem der Stab die höchste Schwingungsamplitude hat, so wird die Schwingungsamplitude des Transversalschwingungsmodes des Stabs am stärksten vermindert. Dadurch hat die Lagerschwingungsmesseinrichtung eine hohe Messgenauigkeit, da das Messergebnis des mindestens einen Schwingungssensors von eventuellen Schwingungen des Stabs nicht beeinträchtigt wird.

Bevorzugt ist der Abstützvorsprung als ein Kolbenring ausgebildet. Dadurch liegt der Abstützvorsprung entlang des Umfangs an der Innenwand des Durchgangslochs an, so dass der Abstützvorsprung in dem Durchgangsloch eine Abdichtwirkung hat. Somit kommt das Lagergehäuse mit einem eventuell in dem Außengehäuse sich befindlichen Gas nicht in Kontakt.

Der Stab weist bevorzugt einen Innenkanal auf, so dass der Stab als ein Rohr ausgebildet ist, wobei durch den Innenkanal Sperrluft förderbar ist. Ist der Stab in dem Durchgangsloch eingebaut, das auch als Sperrluftkanal in der Turbomaschine benutzt wird, so passiert die Sperrluft das Durchgangsloch durch den Sperrluftkanal. Dadurch ist von der Sperrluft der mindestens eine Schwingungssensor gekühlt, so dass dieser beim Betrieb eine vorteilhaft niedrige Betriebstemperatur von etwa unter 130°C hat. Somit braucht der mindestens eine Schwingungssensor für eine höhere Betriebstemperatur nicht ausgelegt zu sein, wodurch der mindestens eine Schwingungssensor von kostengünstiger Bauart ist. Außerdem wird mit der Sperrluft verhindert, dass heißes Gas, das sich eventuell in dem Innengehäuse befindet, nach außen gelangt.

An dem Außenlängsende ist bevorzugt ein Schwingungssensorträger vorgesehen, an dem der mindestens eine Schwingungssensor angebracht. Ferner ist es bevorzugt, dass der Schwingungssensorträger drei Schwingungssensoren aufweist. Dadurch sind die Schwingungssensoren redundant vorgesehen, wodurch die Lagerschwingungsmesseinrichtung eine hohe Verfügbarkeit hat.

Eine umlaufende Scheibe ist bevorzugt an dem Stab befestigt, auf der eine Verkabelung der Schwingungssensoren angebracht ist. Ferner ist bevorzugt auf der Verkabelung eine Keramikschicht zur thermischen Isolation der Verkabelung aufgebracht. Das Außenlängsende ist bevorzugt in einer Sperrluftkammer mit Sperrluftbeaufschlagung untergebracht, so dass von der Sperrluftkammer durch den Innenkanal Sperrluft strömbar ist. An der Sperrluftkammer ist bevorzugt eine Anschlussbuchse vorgesehen, an die die Verkabelung elektrisch geschaltet ist und mit der die Verkabelung von außen anschließbar ist.

Der Schwingungssensorträger weist bevorzugt an seiner außenseitigen Stirnseite ein Schild zum thermischen Isolieren des mindestens einen Schwingungssensors und der Verkabelung auf. Ferner sind bevorzugt der Schwingungssensorträger mit dem mindestens einen Schwingungssensor und die Scheibe mit der Verkabelung in der Sperrluftkammer untergebracht. Außerdem ist es bevorzugt, dass die Innenseite des Durchgangslochs mit einer verschleißfesten Beschichtung versehen ist. Dadurch ist es unterbunden, dass beim Betrieb der Turbomaschine, wenn der Stab so stark schwingt, dass er die Innenwand des Durchgangslochs berührt, an der Innenwand des Durchgangslochs scheuert.

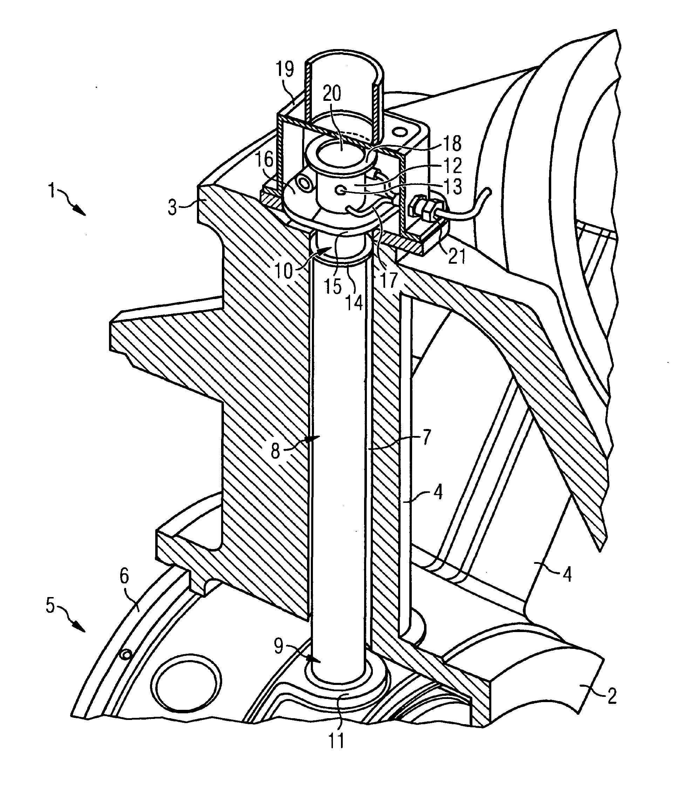

Im Folgenden wird eine bevorzugte Ausführungsform der erfindungsgemäßen Lagerschwingungsmesseinrichtung in einer erfindungsgemäßen Turbomaschine anhand der beigefügten schematischen Zeichnung erläutert. Es zeigt Fig. 1 einen perspektivischen Ausschnitt der erfindungsgemäßen Ausführungsform.

Wie es aus Fig. 1 ersichtlich ist weist eine Turbomaschine 1 ein Innengehäuse 2 und ein Außengehäuse 3 auf. Das Außengehäuse 3 ist konzentrisch um das Innengehäuse 2 angeordnet und von einer Mehrzahl über den Umfang gleichmäßig verteilten Streben 4 auf Abstand gehalten. In dem Innengehäuse 2 angeordnet ist ein Lager mit einem Lagergehäuse 6 vorgesehen, das an der Innenseite des Innengehäuses 2 abgestützt ist. In der Strebe 4 ist ein radial sich erstreckendes Durchgangsloch 7 vorgesehen, wobei in dem Durchgangsloch 7 eine Lagerschwingungsmesseinrichtung eingebaut ist. Die Lagerschwingungsmesseinrichtung weist einen Stab 8 mit einem Innenlängsende 9 und einem dem Innenlängsende 9 abgewandten Außenlängsende 10 auf. Der Stab 8 ist in dem Durchgangsloch 7 untergebracht und mit dem Innenlängsende 9 an dem Lagergehäuse 6 mit einer Gewindeverbindung 11 befestigt. Der Stab 8 weist an seinem Außenumfang einen Kolbenring 14 auf, mit der der Stab 8 an der Innenseite des Durchgangslochs 7 transversal abgestützt ist.

Der Stab 8 ist als ein Rohr ausgebildet, das einen Innenkanal 20 aufweist. An dem Außenlängsende 10 ist ein Schwingungssensorträger 13 vorgesehen, an dem drei Schwingungssensoren 13 angebracht sind. Der Schwingungssensorträger 12 weist an seiner dem Stab 8 zugewandten Seite eine umlaufende Scheibe 15 auf, auf der eine Verkabelung 17 der Schwingungssensoren 13 angebracht ist. Auf der Verkabelung 17 ist eine Keramikschicht 16 zur thermischen Isolation der Verkabelung 17 aufgebracht.

Der Schwingungssensorträger 12 mit seinen Schwingungssensoren 13 und der Scheibe 25 ist in einer Sperrluftkammer 19 mit Sperrluftbeaufschlagung untergebracht, so dass von der Sperrluftkammer 19 durch den Innenkanal Sperrluft strömt. An der Sperrluftkammer 19 ist eine Anschlussbuchse 21 vorgesehen, an die die Verkabelung 17 elektrisch angeschlossen ist.

Der Schwingungssensorträger 12 weist an seiner außenseitigen Stirnseite ein Schild 18 zum thermischen Isolieren der Schwingungssensoren 13 und der Verkabelung 17 auf.

## Patentansprüche

1. Lagerschwingungsmesseinrichtung für eine Turbomaschine (1), in der ein Außengehäuse (3) um ein Innengehäuse (2) konzentrisch angeordnet ist und mit mindestens einer Strebe (4) auf Abstand gehalten ist, in dem ein Lagergehäuse (6) angeordnet ist, das durch ein radial sich erstreckendes Durchgangsloch (7) in der Strebe (4) von dem Außengehäuse (3) her zugänglich ist, wobei die Lagerschwingungsmesseinrichtung einen Stab (8) mit einem Innenlängsende (9) und einem dem Innenlängsende (9) abgewandten Außenlängsende (10) aufweist, der in dem Durchgangsloch (7) untergebracht ist und mit dem Innenlängsende (9) an dem Lagergehäuse (6) befestigt ist sowie an dem Außenlängsende (10) mindestens einen Schwingungssensor (13) aufweist,
**dadurch gekennzeichnet, dass**
der Stab (8) an seiner Außenoberfläche mindestens einen Abstützvorsprung (14) aufweist, mit dem der Stab (8) an der Innenseite des Durchgangslochs (7) transversal abgestützt ist, so dass die Schwingungsamplitude eines Transversalschwingungsmodes des Stabs (8) vermindert ist.

2. Lagerschwingungsmesseinrichtung gemäß Anspruch 1,
wobei der Stab (8) mit seinem Innenlängsende (9) an dem Lagergehäuse (6) mit einer Gewindeverbindung (11) befestigt ist.

3. Lagerschwingungsmesseinrichtung gemäß Anspruch 1,
wobei der Abstützvorsprung (14) als ein Kolbenring ausgebildet ist.

4. Lagerschwingungsmesseinrichtung gemäß einem der Ansprüche 1 bis 3,
wobei der Stab (8) einen Innenkanal (20) aufweist, so dass der Stab (8) als ein Rohr ausgebildet ist, wobei durch den Innenkanal (20) Sperrluft förderbar ist.

5. Lagerschwingungsmesseinrichtung gemäß einem der Ansprüche 1 bis 4,
wobei an dem Außenlängsende (10) ein Schwingungssensorträger (12) vorgesehen ist, an dem der mindestens eine Schwingungssensor (13) angebracht ist.

6. Lagerschwingungsmesseinrichtung gemäß Anspruch 5,
wobei der Schwingungssensorträger (12) drei Schwingungssensoren (13) aufweist.

7. Lagerschwingungsmesseinrichtung gemäß Anspruch 5 oder 6,
wobei auf dem Schwingungssensorträger (12) eine Verkabelung (17) der Schwingungssensoren (13) angebracht ist.

8. Lagerschwingungsmesseinrichtung gemäß Anspruch 7,
wobei auf der Verkabelung (17) eine Keramikschicht (16) zur thermischen Isolation der Verkabelung (17) aufgebracht ist.

9. Lagerschwingungsmesseinrichtung gemäß einem der Ansprüche 4 bis 8,
wobei das Außenlängsende (10) in einer Sperrluftkammer (19) mit Sperrluftbeaufschlagung untergebracht ist, so dass von der Sperrluftkammer (19) durch den Innenkanal (20) Sperrluft strömbar ist.

10. Lagerschwingungsmesseinrichtung gemäß Anspruch 9,
wobei an der Sperrluftkammer (19) eine Anschlussbuchse (21) vorgesehen ist, an die die Verkabelung (17) elektrisch geschaltet ist und mit der die Verkabelung (17) von außen anschließbar ist.

11. Lagerschwingungsmesseinrichtung gemäß Anspruch 9 oder 10,
wobei der Schwingungssensorträger (12) an seiner außenseitigen Stirnseite ein Schild (18) zum thermischen Isolieren des mindestens einen Schwingungssensors (13) und der Verkabelung (17) aufweist.

12. Lagerschwingungsmesseinrichtung gemäß Anspruch 9 oder 10,
wobei der Schwingungssensorträger (12) mit dem mindestens einen Schwingungssensor (13) und der Verkabelung (17) in der Sperrluftkammer (19) untergebracht ist.

13. Turbomaschine mit einem Außengehäuse (3), einem Innengehäuse (2), einem in dem Innengehäuse (2) angeordneten Lagergehäuse (6) und mindestens einer Strebe (4), mit der das Außengehäuse (3) und das Innengehäuse (2) konzentrisch im Abstand zueinander gehalten sind, wobei in der Strebe (4) ein radial sich erstreckendes Durchgangsloch (7) vorgesehen ist, wobei in dem Durchgangsloch (7) eine Lagerschwingungsmesseinrichtung mit einem Stab (8) gemäß einem der Ansprüche 1 bis 13 eingebaut ist, die mit ihrem Innenlängsende (9) an dem Lagergehäuse (6) befestigt ist und mit ihrem Außenlängsende (10) in dem Außengehäuse (3) sich erstreckt.

14. Lagerschwingungsmesseinrichtung gemäß Anspruch 13,
wobei die Innenseite des Durchgangslochs (7) mit einer verschleißfesten Beschichtung versehen ist.

## Claims

1. Bearing vibration measuring device for a turbomachine (1), in which an outer casing (3) is arranged concentrically around an inner casing (2) and is held at a distance by way of at least one strut (4), in which inner casing is arranged a bearing housing (6) which, by means of a radially extending through-hole (7) in the strut (4), is accessible from the outer casing (3), wherein the bearing vibration measuring device has a rod (8) with an inner longitudinal end (9) and an outer longitudinal end (10) facing away from the inner longitudinal end (9), which rod is accommodated in the through-hole (7) and by the inner longitudinal end (9) is fastened on the bearing housing (6) and also has at least one vibration sensor (13) on the outer longitudinal end (10), wherein
the rod (8) has at least one supporting projection (14) on its outer surface, by which the rod (8) is transversely supported on the inner side of the through-hole (7) so that the vibration amplitude of a transverse vibration mode of the rod (8) is reduced.

2. Bearing vibration measuring device according to Claim 1, wherein the rod (8) is fastened by its inner longitudinal end (9) on the bearing housing (6) by a threaded connection (11).

3. Bearing vibration measuring device according to Claim 1,
wherein the supporting projection (14) is formed as a piston ring.

4. Bearing vibration measuring device according to one of Claims 1 to 3, wherein the rod (8) has an inner passage (20) so that the rod (8) is formed as a tube, wherein sealing air can be delivered through the inner passage (20).

5. Bearing vibration measuring device according to one of Claims 1 to 4,
wherein provision is made on the outer longitudinal end (10) for a vibration sensor mounting (12) on which the at least one vibration sensor (13) is attached.

6. Bearing vibration measuring device according to Claim 5, wherein the vibration sensor mounting (12) has three vibration sensors (13) .

7. Bearing vibration measuring device according to Claim 5 or 6,
wherein a cabling (17) of the vibration sensors (13) is attached on the vibration sensor mounting (12).

8. Bearing vibration measuring device according to Claim 7, wherein a ceramic coating (16) is applied to the cabling (17) for thermal insulation of said cabling (17).

9. Bearing vibration measuring device according to one of Claims 4 to 8,
wherein the outer longitudinal end (10) is accommodated in a sealing air chamber (19) with sealing air charging so that sealing air can flow from the sealing air chamber (19) through the inner passage (20).

10. Bearing vibration measuring device according to Claim 9, wherein provision is made on the sealing air chamber (19) for a connecting socket (21) to which the cabling (17) is electrically connected and by which the cabling (17) can be connected from the outside.

11. Baring vibration measuring device according to Claim 9 or 10,
wherein the vibration sensor mounting (12) has a guard plate (18) on its outer end face for thermal insulation of the at least one vibration sensor (13) and of the cabling (17).

12. Bearing vibration measuring device according to Claim 9 or 10,
wherein the vibration sensor mounting (12) with the at least one vibration sensor (13) and the cabling (17) is accommodated in the sealing air chamber (19).

13. Turbomachine with an outer casing (3), an inner casing (2), a bearing housing (6) which is arranged in the inner casing (2), and at least one strut (4), by which the outer casing (3) and the inner casing (2) are mounted concentrically at a distance from each other, wherein a radially extending through-hole (7) is provided in the strut (4),
wherein a bearing vibration measuring device with a rod (8) according to one of Claims 1 to 12 is installed in the through-hole (7), which rod is fastened by its inner longitudinal end (9) on the bearing housing (6) and by its outer longitudinal end (10) extends in the outer casing (3).

14. Bearing vibration measuring device according to Claim 13, wherein the inner side of the through-hole (7) is provided with a wear-resistant coating.

## Revendications

1. Dispositif de mesure des vibrations des paliers pour une turbomachine ( 1 ), dans lequel un carter ( 3 ) extérieur est monté concentriquement autour d'un carter intérieur et maintenu à distance au moyen d'une entretoise ( 4 ), carter ( 2 ) intérieur dans lequel est ménagé un logement ( 6 ) de palier qui est accessible à partir du carter ( 3 ) extérieur par un trou ( 7 ) traversant s'étendant radialement dans l'entretoise ( 4 ), le dispositif de mesure des vibrations des paliers comportant une barre ( 8 ) ayant une extrémité ( 9 ) longitudinale intérieure et une extrémité ( 10 ) longitudinale extérieure, qui est éloignée de l'extrémité ( 10 ) longitudinale intérieure, qui est logée dans le trou ( 7 ) traversant et qui est fixée au logement ( 6 ) de palier par l'extrémité ( 9 ) longitudinale intérieure, ainsi qu'ayant au moins un capteur ( 13 ) de vibration sur l'extrémité ( 10 ) longitudinale extérieure,
**caractérisé en ce que**
la barre a sur sa surface extérieure au moins une saillie ( 14 ) d'appui, par laquelle la barre est soutenue transversalement du côté intérieur du trou ( 7 ) traversant de manière à diminuer l'amplitude de vibration d'un mode de vibration transversale de la barre ( 8 ) .

2. Dispositif de mesure des vibrations des paliers suivant la revendication 1,
dans lequel la barre ( 8 ) est fixée par son extrémité ( 9 ) longitudinale intérieure au logement ( 6 ) de palier par un filetage ( 11 ) .

3. Dispositif de mesure des vibrations des paliers suivant la revendication 1,
dans lequel la saillie ( 14 ) d'appui est constituée en segment de piston.

4. Dispositif de mesure des vibrations des paliers suivant l'une des revendications 1 à 3,
dans lequel la barre ( 8 ) a un canal ( 20 ) intérieur de sorte que la barre ( 8 ) est constituée sous la forme d'un tuyau, de l'air d'arrêt pouvant être véhiculé dans le canal ( 20 ) intérieur.

5. Dispositif de mesure des vibrations des paliers suivant l'une des revendications 1 à 4,
dans lequel il est prévu à l'extrémité ( 10 ) longitudinale extérieure un support ( 12 ) de capteur de vibration, sur lequel est monté le au moins un capteur ( 13 ) de vibration.

6. Dispositif de mesure des vibrations des paliers suivant la revendication 5,
dans lequel le support ( 12 ) de capteur de vibration a trois capteurs ( 13 ) de vibration.

7. Dispositif de mesure des vibrations des paliers suivant la revendication 5 ou 6,
dans lequel un câblage ( 17 ) des capteurs ( 13 ) de vibration est monté sur le support ( 12 ) de capteur de vibration.

8. Dispositif de mesure des vibrations des paliers suivant la revendication 7,
**caractérisé en ce que** sur le câblage ( 17 ) est déposée une couche ( 16 ) de céramique pour isoler thermiquement le câblage ( 17 ) .

9. Dispositif de mesure des vibrations des paliers suivant l'une des revendications 4 à 8,
dans lequel l'extrémité ( 10 ) longitudinale extérieure est logée dans une chambre ( 19 ) d'air d'arrêt ayant une alimentation en air d'arrêt de manière à ce que de l'air d'arrêt puisse passer de la chambre ( 19 ) d'air d'arrêt dans le canal ( 20 ) intérieur.

10. Dispositif de mesure des vibrations des paliers suivant la revendication 9,
dans lequel il est prévu sur la chambre ( 19 ) d'air d'arrêt une douille ( 21 ) de raccordement, sur laquelle le câblage ( 17 ) est monté électriquement et par laquelle le câblage ( 17 ) peut être raccordé de l'extérieur.

11. Dispositif de mesure des vibrations des paliers suivant la revendication 9 ou 10,
dans lequel le support ( 12 ) de capteur de vibration a sur son côté frontal du côté extérieur un bouclier ( 18 ) pour l'isolation thermique du au moins un capteur ( 13 ) de vibration et du câblage ( 17 ) .

12. Dispositif de mesure des vibrations des paliers suivant la revendication 9 ou 10,
dans lequel le support ( 12 ) de capteur de vibration est, avec le au moins un capteur ( 13 ) de vibration et le câblage ( 17 ) , logé dans la chambre ( 19 ) d'air d' arrêt.

13. Turbomachine ayant un carter ( 3 ) extérieur, un carter ( 2 ) intérieur, un logement ( 6 ) de palier ménagé dans le carter ( 2 ) intérieur et au moins une entretoise ( 4 ) par laquelle le carter ( 3 ) extérieur et le carter ( 2 ) intérieur sont maintenus concentriquement à distance l'un de l'autre, un trou ( 7 ) traversant et s'étendant radialement étant prévu dans l'entretoise ( 4 ), dans laquelle dans le trou ( 7 ) traversant est inséré un dispositif de mesure des vibrations de palier ayant une barre ( 8 ) suivant l'une des revendications 1 à 13, qui est fixé par son extrémité ( 9 ) longitudinale intérieure au logement ( 6 ) de palier et qui s'étend dans le carter ( 3 ) extérieur par son extrémité ( 10 ) longitudinale extérieure.

14. Dispositif de mesure des vibrations des paliers suivant la revendication 13,
dans lequel le côté intérieur du trou ( 7 ) traversant est pourvu d'un revêtement résistant à l'usure.
